# EUROPÄISCHE PATENTANMELDUNG

(11) **EP 4 606 205 A1**
(43) Veröffentlichungstag der Anmeldung: **27.08.2025**
(21) Anmeldenummer: 25152423.7
(22) Anmeldetag: 17.01.2025
(51) Int. Cl.: A01D 61/02

(54) **SCHRÄGFÖRDERER FÜR EINE ERNTEMASCHINE**

(30) Priorität: 21.02.2024 DE 102024104858
(71) Anmelder: CLAAS Selbstfahrende Erntemaschinen GmbH, 33428 Harsewinkel (DE)
(72) Erfinder: KORTENJANN, Ludger, 48231 Warendorf (DE); WESTHOFF, Mike, 59469 Ense (DE)
(74) Vertreter: CLAAS Gruppe

(57) **Zusammenfassung**

Die Erfindung betrifft einen Schrägförderer (2) für eine selbstfahrende Erntemaschine (1) mit zumindest drei Umlenkrädern (3), die jeweils auf einer Umlenkwelle (23) angeordnet sind, und einer der Anzahl der Umlenkräder (3) entsprechenden Anzahl an Antriebsrädern (4), um welche parallel zueinander verlaufende Riemen (5) endlos umlaufen, wobei entlang der Länge der Riemen (5) eine Mehrzahl von Förderleisten (18) angeordnet sind, welche sich jeweils zwischen den Riemen (5) erstrecken, wobei die Antriebsräder (4) gleichmäßig über ihren Umfang verteilt angeordnete Mitnehmer (25) aufweisen, wobei zwischen benachbarten Mitnehmern (25) ein Freiraum (27) besteht, in welchen an den Riemen (5) innenseitig angeordnete Nocken (22) drehmomentübertragend eingreifen, wobei die Mehrzahl von Förderleisten (18) zumindest eine Teilmenge von Förderleisten (18, 29) umfasst, die jeweils zumindest drei Riemen (5) überdecken.

## Beschreibung

Die Erfindung betrifft einen Schrägförderer für eine selbstfahrende Erntemaschine gemäß dem Oberbegriff des Anspruchs 1.

Mit einem an einer selbstfahrenden Erntemaschine angeordneten Vorsatzgerät geerntetes Erntegut wird mittels eines Schrägförderers in eine selbstfahrende Erntemaschine, beispielsweise einen Mähdrescher, gefördert, und dann dort verarbeitet.

Aus der DE 102018 112 047 A1 ist ein Schrägförderer gemäß dem Oberbegriff des Anspruchs 1 bekannt. Der dort beschrieben Schrägförderer umfasst vier parallel zueinander verlaufende Riemen, die jeweils zwischen einem Umlenkrad und einem Antriebsrad eingespannt sind und endlos umlaufen. Entlang der Länge der Riemen sind eine Mehrzahl von Förderleisten angeordnet, die jeweils zwei der Riemen überdecken und mit diesen verbunden sind. Die Riemen sind als Zahnriemen ausgebildet und weisen somit eine Vielzahl von Nocken auf. Zum Übertragen einer Antriebskraft auf die Riemen weisen die Antriebsräder über ihren Umfang verteilt eine Mehrzahl von Mitnehmern auf, wobei im bestimmungsgemäßen Betriebszustand des Schrägförderers die Nocken der Riemen in einen Freiraum zwischen zwei benachbarten Mitnehmern eingreifen.

Nachteilig an dem aus dem Stand der Technik bekannten Schrägförderer ist, dass sich Erntegutbestandteile auf einen der Riemen des Schrägförderers ablegen können und zwischen dem Riemen und dem Antriebsrad eingeklemmt werden. In Abhängigkeit der Größe der eingeklemmten Erntegutbestandteile kann der Riemen aus seiner formschlüssigen Antriebsverbindung mit dem Antriebsrad abheben und einen Mitnehmer des Antriebsrads überspringen, sodass der entsprechende Riemen gegenüber den weiteren Riemen vor- oder nacheilt. Dadurch bedingt stehen die mit dem vor- oder nacheilenden Riemen verbunden Förderleisten schräg, wodurch deren Verbindungsstellen mit dem Riemen verstärkt belastet werden können und der Gutfluss negativ beeinflusst werden kann.

Es ist deshalb Aufgabe der Erfindung, die beschriebenen Nachteile des Standes der Technik zu vermeiden und insbesondere einen Schrägförderer zu schaffen, dessen Riemen eine geringere Neigung zum Überspringen eines Mitnehmers des Antriebsrads aufweisen.

Diese Aufgabe wird erfindungsgemäß durch die kennzeichnenden Merkmale des Anspruchs 1 gelöst. Vorteilhafte Weiterbildungen sind Gegenstand der abhängigen Ansprüche.

Gemäß dem Anspruch 1 wird ein Schrägförderer für eine selbstfahrende Erntemaschine mit zumindest drei Umlenkrädern vorgeschlagen, die jeweils auf einer Umlenkwelle angeordnet sind, und einer der Anzahl der Umlenkräder entsprechenden Anzahl an Antriebsrädern, um welche parallel zueinander drei Riemen endlos umlaufen, wobei entlang der Länge der Riemen eine Mehrzahl von Förderleisten angeordnet sind, welche sich jeweils zwischen den Riemen erstrecken, wobei die Antriebsräder gleichmäßig über ihren Umfang verteilt angeordnete Mitnehmer aufweisen, wobei zwischen benachbarten Mitnehmern ein Freiraum besteht, in welchen an den Riemen innenseitig angeordnete Nocken drehmomentübertragend eingreifen, wobei die Mehrzahl von Förderleisten zumindest eine Teilmenge von Förderleisten umfasst, die jeweils zumindest drei Riemen überdecken.

Die mehr als zwei Riemen überdeckenden Förderleisten bewirken eine steifere Verbindung zwischen den einzelnen Riemen. Mithin wirkt einer zuvor beschriebenen Relativbewegung eines Riemens zu den weiteren Riemen eine größere Kraft entgegen. Neigt eine Förderleiste an einer Stelle zum Überspringen eines Nockens, sorgen die weiteren im Eingriff mit der Förderleiste befindlichen Nocken dafür, dass das biegesteife Verhalten der durchgehenden Förderleiste zum Tragen kommt. Mithin wirkt eine Kraft dem Überspringen verstärkt entgegen.

Gemäß einer vorteilhaften Weiterbildung kann der Schrägförderer mehr als drei Umlenkräder, vorzugsweise vier Umlenkräder, und eine der Anzahl der Umlenkräder entsprechende Anzahl an Antriebsrädern umfassen um die jeweils ein Riemen endlos umläuft.

Gemäß einer weiteren vorteilhaften Weiterbildung können in Förderrichtung des Schrägförderers mehrere Förderleisten aufeinander folgen, die zumindest drei Riemen überdecken, wobei die aufeinander folgenden Förderleisten jeweils einen Versatz in Querrichtung des Riemens zueinander aufweisen. Hierdurch kann sich ein besonders vorteilhafte Gutfluss innerhalb des Schrägförderers ergeben und zugleich eine steife Verbindung zwischen den Riemen erreicht werden.

Um eine besonders steife Verbindung zwischen den in dem Schrägförderer angeordneten Riemen herzustellen kann die Teilmenge der Förderleisten aus Förderleisten bestehen, die jeweils sämtliche der Riemen überdecken. Eine vorteilhafte Ausgestaltung sieht vor, dass sämtliche Förderleisten jeweils sämtliche Riemen überdecken.

Eine weitere vorteilhafte Ausgestaltung sieht vor, dass eine weitere Teilmenge der im Schrägförderer angeordneten Förderleiste aus Förderleisten besteht, die jeweils lediglich zwei Riemen überdecken, wobei in Förderrichtung des Schrägförderers die lediglich zwei Riemen überdeckenden Förderleisten alternierend zu den Förderleisten angeordnet sind, die jeweils sämtlichen Riemen überdecken. Hierdurch kann der Gutfluss positiv beeinflusst werden, da zusätzliche kürzere Förderleisten einer sogenannten Paketbildung, also einer wulstartigen Anhäufung von Erntegut entgegenwirken können und somit den Erntegutfluss positiv beeinflussen können.

Vorzugsweise können die Förderleisten jeweils ortsfest mit den überdeckten Riemen, vorzugsweise mittels einer Schraubverbindung, verbunden sein.

Gemäß einer vorteilhaften Weiterbildung können die Förderleisten eine u-förmige Kontur aufweisen.

Die vorliegende Erfindung wird nachstehend anhand eines in den Zeichnungen dargestellten Ausführungsbeispiels näher erläutert.
- Figur 1: schematisch einen Ausschnitt aus einer selbstfahrenden Erntemaschine in einer Seitenansicht;
- Figur 2: einen Ausschnitt des Schrägförderers mit einem Antriebsrad und einem Riemen;
- Figur 3: schematisch einen Ausschnitt einer innerhalb des Schrägförderers befindlichen Förderleiste, wobei die Förderleiste abschnittsweise schräg steht;
- Figur 4: schematisch eine Anordnung von innerhalb des Schrägförderers befindlichen Förderleisten;
- Figur 5: schematisch eine alternative Anordnung von innerhalb des Schrägförderers befindlichen Förderleisten.

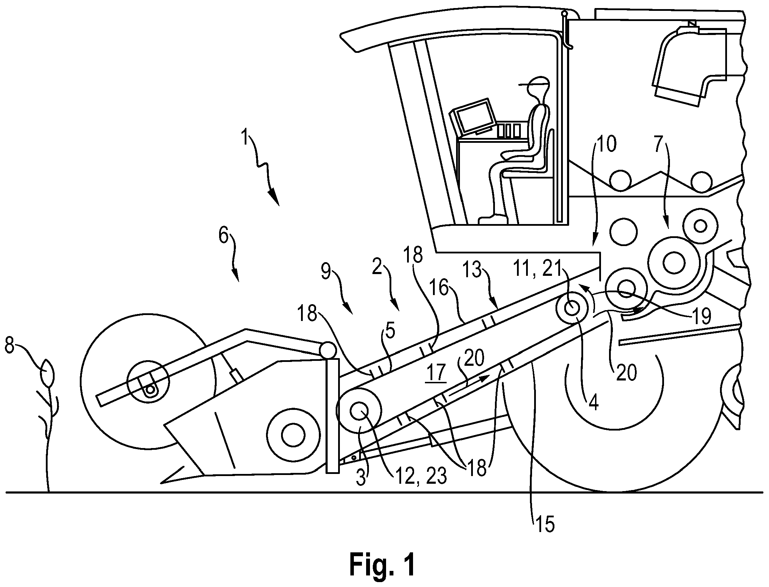

Fig. 1 zeigt schematisch einen Ausschnitt aus einer Anordnung mit einem Schrägförderer 2 und einer selbstfahrenden Erntemaschine 1, hier einem Mähdrescher. Im Folgenden werden die Begriffe Erntemaschine 1 und Mähdrescher synonym verwendet.

Der Schrägförderer 2 ist lösbar an der Erntemaschine 1 angeordnet. Er ist zwischen einem Vorsatzgerät 6 und der Erntemaschine 1 angeordnet. Das Vorsatzgerät 6 ist zum Aufnehmen von Erntegut 8 vorgesehen. Um das Erntegut 8 bodennah abschneiden zu können, ist der Schrägförderer 2 um eine Schwenkachse (nicht gezeigt) schwenkbar an der Erntemaschine 1 angeordnet, so dass das Vorsatzgerät 6 höhenverstellbar ist. Mit dem Schrägförderer 2 wird das Erntegut 8 zu dessen Verarbeitung in die Erntemaschine 1 gefördert. Das Erntegut 8 wird hier in einem Dreschwerk 7 der Erntemaschine verarbeitet.

Der Schrägförderer 2 weist zumindest drei Antriebsräder 4 und diesen zugeordnete Umlenkräder 3 auf. Das jeweilige Umlenkrad 3 ist im Bereich eines Zuführendes 9 des Schrägförderers 2 angeordnet. Am Zuführende 9 ist das Vorsatzgerät 6 am Schrägförderer 2 befestigt. Das vom Vorsatzgerät 6 aufgenommene Erntegut 8 wird am Zuführende 9 in den Schrägförderer 2 eingeführt.

Die Antriebsräder 4 sind an einem dem Zuführende 9 gegenüberliegenden Abgabeende 10 des Schrägförderers 2 angeordnet, an dem das Erntegut 8 den Schrägförderer 2 verlässt. Das Erntegut gelangt in die Erntemaschine 1, hier in das Dreschwerk 7, zu dessen weiterer Verarbeitung.

Das jeweilige Antriebsrad 4 ist konzentrisch zu einer Antriebsachse 11 drehfest an der Antriebswelle 21 angeordnet. Ebenso ist das jeweilige Umlenkrad 3 drehfest an einer Umlenkachse 12 angeordnete Umlenkwelle 23 gelagert. Sowohl die Antriebswelle 21 als auch die Umlenkwelle 23 sind drehbar in einem Gehäuse 13, hier in einander gegenüberliegenden Gehäuseseitenwänden (nicht dargestellt), gelagert. Die im Wesentlichen vertikal verlaufenden Gehäuseseitenwände sind durch eine Gehäuseunterwand 15 und eine Gehäuseoberwand 16, die sich zwischen den Gehäuseseitenwänden horizontal zu diesen erstrecken, miteinander verbunden. Gemeinsam begrenzen die Gehäuseseitenwände, die Gehäuseunterwand 15 sowie die Gehäuseoberwand 16 einen insbesondere etwa quaderförmig ausgebildeten Innenraum 17 des Schrägförderers 2. Zum Fördern des Erntegutes 8 sind eine der Anzahl der Antriebsräder 4 entsprechende Anzahl endloser Riemen 5 vorgesehen, welche ein jeweiliges Antriebsrad 4 und ein zugehöriges Umlenkrad 3 umschlingen. Auf den Riemen 5 sind Förderleisten 18 äquidistant zueinander angeordnet, welche sich parallel zur Antriebsachse 11 erstrecken und der Mitnahme des Erntegutes 8 dienen. Die Förderleisten 18 weisen eine u-förmige Kontur auf.

In dem Schrägförderer 2 wird das Erntegut 8 unterschächtig gefördert. Das heißt, dass es entlang der Unterwand 15 gefördert wird. Dafür werden die Antriebsräder 4 in eine Drehrichtung 19 um die Antriebsachse 11 angetrieben. Eine Förderrichtung 20 des Erntegutes 8 ist hier durch zwei Pfeile, einer im Schrägförderer 2 und einer am Abgabeende 10, schematisch gezeigt.

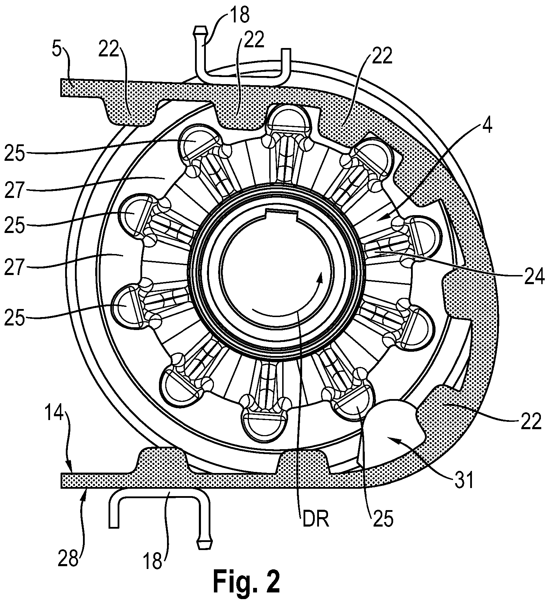

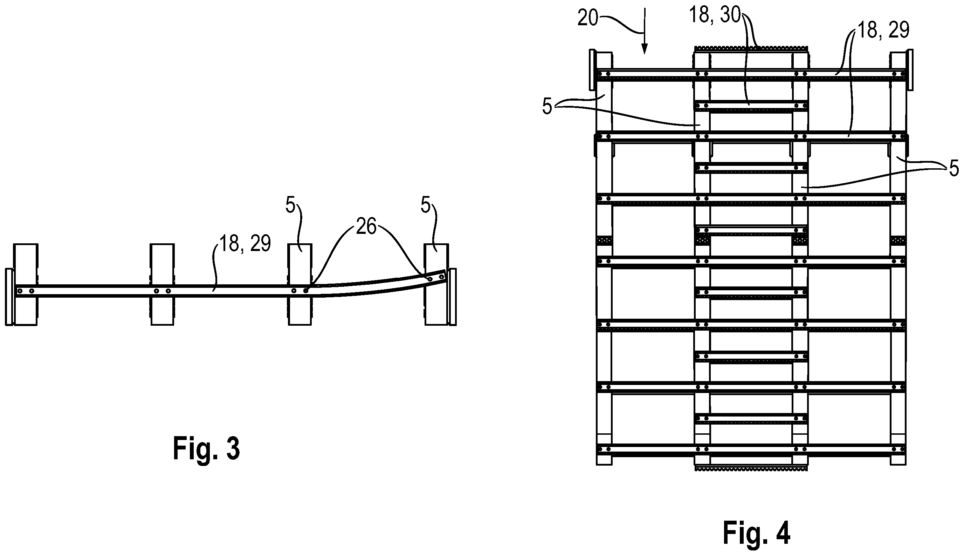

In Fig. 2 ist ein Ausschnitt des Schrägförderers 2 mit einem Antriebsrad 4 und einem Riemen 5 dargestellt. Der Riemen 5 ist als ein Zahnriemen ausgebildet. Der Riemen 5 besteht aus einem flexiblen Material und ist an seiner Innenseite 14 mit im Wesentlichen trapezförmigen Nocken 22 versehen. Das Antriebsrad 4 weist zum formschlüssigen Antreiben des jeweiligen Riemens 5 eine auf der angetriebenen Welle 21 drehfest angeordnete Nabe 24 auf, an der gleichmäßig verteilt Mitnehmer 25 angeordnet sind. Mit dem Pfeil DR ist eine Rotationsrichtung des Antriebsrads 4 bezeichnet. An seiner Außenseite 28 des Riemens 5 sind die Förderleisten 18 mittels einer Schraubverbindung 26 (siehe Fig. 3) angeordnet. Zum Antreiben des jeweiligen Riemens 5 besteht zwischen benachbarten Mitnehmern 25 ein teilungsbedingter Freiraum 27, in welchen die an den jeweiligen Riemen 5 innenseitig angeordnete Nocken 22 drehmomentübertragend eingreifen. Die Nocken 22 liegen zumindest abschnittsweise formschlüssig an den Mitnehmern 25 an und werden von diesen in Rotationsrichtung DR des Antriebsrads 4 mitgenommen.

Wie Fig. 2 näher zeigt, können sich während des Erntevorgangs verschiedene Erntegutbestandteile 31, wie beispielsweise Maiskolben, oder auch andere Fremdkörper 31 auf den Riemen 5 ablegen und zwischen den Riemen 5 und das Antriebsrad 4 gelangen. In diesem Fall können die Erntegutbestandteile 31 bewirken, dass der Riemen aus der formschlüssigen Antriebsverbindung mit dem Antriebsrad 4 abhebt. Infolge eines Abhebens zieht der Riemen 5 die zusätzlich benötigte Riemenlänge nach. Hierbei richtet sich die nachgezogene Riemenlänge nach der Dimension des sich zwischen dem Riemen 5 und dem Antriebsrad 4 befindlichen Erntegutbestandteils 31. Besonders große Erntegutbestandteile 31 führen dazu, dass derart viel Riemen 5 nachgezogen oder eine Längung über die Elastizität des Riemens 5 freigegeben wird, sodass der Riemen 5 um eine Teilung nach vorne übersetzt bzw. ein Nocken 22 des Riemens 5 seinen bestimmungsgemäßen Mitnehmer 25 überspringt.

Die nachfolgenden Nocken 22 des Riemens 5 überspringen ebenfalls ihren bestimmungsgemäßen Mitnehmer 25, sodass der Riemen 5 nunmehr um einen Mitnehmer 25 voreilt. Dementsprechend stehen, wie in Fig. 3 dargestellt, die mit dem vorlaufenden Riemen 5 verbundenen Förderleisten 18 zumindest abschnittsweise schräg. Dies kann sich negativ auf die Lebensdauer der Schraubverbindungen 26 auswirken und kann die einzelnen Riemen 5 untereinander verspannen. Weiterhin kann der Gutfluss negativ beeinflusst werden.

Erfindungsgemäß ist deshalb vorgesehen, dass die Mehrzahl der den Riemen 5 zugeordneten Förderleisten 18 zumindest eine Teilmenge an Förderleisten 18, 29 umfasst, die jeweils zumindest drei Riemen 5 überdecken. In den bevorzugten Ausführungsformen gemäß der Fig. 3 bis Fig. 5 umfasst der Schrägförderer 2 vier Riemen 5, vier Umlenkräder 3 und vier Antriebsräder 4, wobei die Riemen 5 zwischen jeweils einem Antriebsrad 4 und einem Umlenkrad 3 verspannt sind, wobei zumindest eine Teilmenge der Förderleisten 18, 29 jeweils die vier Riemen 5 überdecken. Hier und vorzugsweise sind die Riemen 5 ortsfest mit den überdeckten Förderleisten 18, 29 mittels Schraubverbindungen 26 verbunden. Die mehr als zwei Riemen 5 überdeckenden Förderleisten 18, 29 bewirken eine steifere Verbindung zwischen den einzelnen Riemen 5. Mithin wirkt einer zuvor beschriebenen Relativbewegung eines Riemens 5 zu den weiteren Riemen 5 eine größere Kraft entgegen.

Wie Fig. 4 zeigt, können zusätzlich zu der vorstehend beschriebenen ersten Teilmenge von Förderleisten 18, 29, dessen Förderleisten 18, 29 jeweils sämtliche der Riemen 5 überdecken und mit diesen ortsfest verbunden sind, auch eine zweite Teilmenge von Förderleisten 18, 30 vorgesehen sein, dessen Förderleisten 18, 30 jeweils lediglich zwei Riemen 5, insbesondere die mittleren Riemen 5, überdecken. Die Förderleisten 18, 29 der ersten Teilmenge sind hierbei in Förderrichtung 20 alternierend zu den Förderleisten 18, 30 der zweiten Teilmenge angeordnet.

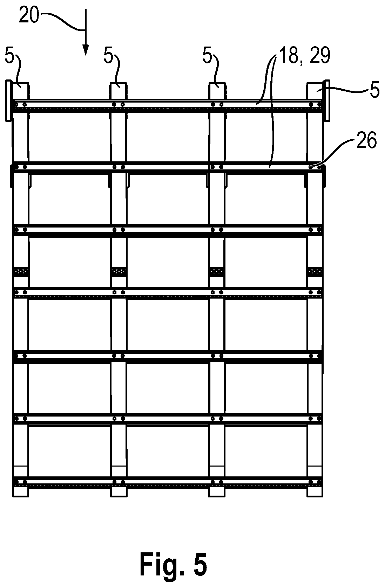

Gemäß der in Fig. 5 dargestellten alternativen Ausführungsform kann der Schrägförderer 2 auch ausschließlich Förderleisten 18, 29 umfassen, die sämtliche der Riemen 5 überdecken und ortsfest mittels einer Schraubverbindung 26 mit diesen verbunden sind.

Eine nicht näher dargestellte weitere alternative Ausführungsform sieht vor, dass der Schrägförderer 2 zumindest vier parallel zueinander angeordnete Riemen 5 und Förderleisten 18, 29 umfasst, die jeweils lediglich drei der Riemen 5 überdecken. Hierbei weisen in Förderrichtung 20 aufeinander folgende Förderleisten 18, 29 jeweils einen Versatz in Querrichtung des Riemens 5 bzw. in eine sich quer zur Förderrichtung 20 erstreckende Richtung auf.

### Bezugszeichenliste:

- 1: Erntemaschine/Mähdrescher
- 2: Schrägförderer
- 3: Umlenkrad
- 4: Antriebsrad
- 5: Riemen
- 6: Vorsatzgerät
- 7: Dreschwerk
- 8: Erntegut
- 9: Zuführende
- 10: Abgabeende
- 11: Antriebsachse
- 12: Umlenkachse
- 13: Gehäuse
- 14: Innenseite
- 15: Gehäuseunterwand
- 16: Gehäuseoberwand
- 17: Innenraum von 2
- 18: Förderleiste
- 19: Drehrichtung
- 20: Förderrichtung
- 21: Antriebswelle
- 22: Nocken
- 23: Umlenkwelle
- 24: Nabe
- 25: Mitnehmer
- 26: Schraubverbindung
- 27: Freiraum
- 28: Außenseite
- 29: Förderleiste
- 30: Förderleiste
- 31: Erntegutbestandteil / Fremdkörper
- DR: Rotationsrichtung

## Patentansprüche

1. Schrägförderer (2) für eine selbstfahrende Erntemaschine (1) mit zumindest drei Umlenkrädern (3), die jeweils auf einer Umlenkwelle (23) angeordnet sind, und einer der Anzahl der Umlenkräder (3) entsprechenden Anzahl an Antriebsrädern (4), um welche parallel zueinander zumindest drei Riemen (5) endlos umlaufen,
wobei entlang der Länge der Riemen (5) eine Mehrzahl von Förderleisten (18) angeordnet sind, welche sich jeweils zwischen den Riemen (5) erstrecken,
wobei die Antriebsräder (4) gleichmäßig über ihren Umfang verteilt angeordnete Mitnehmer (25) aufweisen, wobei zwischen benachbarten Mitnehmern (25) ein Freiraum (27) besteht, in welchen an den Riemen (5) innenseitig angeordnete Nocken (22) drehmomentübertragend eingreifen,
**dadurch gekennzeichnet, dass**
die Mehrzahl von Förderleisten (18) zumindest eine Teilmenge von Förderleisten (18, 29) umfasst, die jeweils zumindest drei Riemen (5) überdecken.

2. Schrägförderer (2) nach Anspruch 1, **dadurch gekennzeichnet, dass** der Schrägförderer (2) mehr als drei Umlenkräder (3), vorzugsweise vier Umlenkräder (3), und eine der Anzahl der Umlenkräder (3) entsprechende Anzahl an Antriebsrädern (4) umfasst um die jeweils ein Riemen (5) endlos umläuft.

3. Schrägförderer (2) nach einem der Ansprüche 1 bis 2, **dadurch gekennzeichnet, dass** in Förderrichtung (20) des Schrägförderers (2) mehrere Förderleisten (18, 29) aufeinander folgen, die zumindest drei Riemen (5) überdecken, wobei die aufeinander folgenden Förderleisten (18, 29) jeweils einen Versatz in Querrichtung des Riemens (5) zueinander aufweisen.

4. Schrägförderer (2) nach einem der Ansprüche 1 bis 3, **dadurch gekennzeichnet, dass** die Teilmenge der Förderleisten (18, 29) aus Förderleisten (18, 29) besteht, die jeweils sämtliche der Riemen (5) überdecken.

5. Schrägförderer (2) nach einem der Ansprüche 1 bis 4, **dadurch gekennzeichnet, dass** sämtliche Förderleisten (18) jeweils sämtliche Riemen (5) überdecken.

6. Schrägförderer (2) nach einem der Ansprüche 1 bis 4, **dadurch gekennzeichnet, dass** eine weitere Teilmenge Förderleisten (18, 30) umfasst, die jeweils lediglich zwei Riemen (5) überdecken, wobei in Förderrichtung des Schrägförderers (2) die lediglich zwei Riemen (5) überdeckenden Förderleisten (18, 30) alternierend zu den Förderleisten (18, 29) angeordnet sind, die jeweils sämtlichen Riemen (5) überdecken.

7. Schrägförderer (2) nach einem der Ansprüche 1 bis 6, **dadurch gekennzeichnet, dass** die Förderleisten (18) jeweils ortsfest mit den überdeckten Riemen (5), vorzugsweise mittels einer Schraubverbindung (26), verbunden sind.

8. Schrägförderer (2) nach einem der Ansprüche 1 bis 7, **dadurch gekennzeichnet, dass** die Förderleisten (18) eine u-förmige Kontur aufweisen.
